# EUROPÄISCHE PATENTANMELDUNG

(11) **EP 1 611 937 A1**
(43) Veröffentlichungstag der Anmeldung: **04.01.2006**
(21) Anmeldenummer: 05012071.6
(22) Anmeldetag: 04.06.2005
(51) Int. Cl.: B01D 46/52

(54) **Filteranordnung**

(30) Priorität: 01.07.2004 DE 102004031816
(71) Anmelder: Carl Freudenberg KG, 69469 Weinheim (DE)
(72) Erfinder: Häfner, Uwe, 69469 Weinheim (DE); Dobner, Roland, 69483 Wald-Michelbach (DE); Bräunling, Volker, 64646 Heppenheim (DE)

(57) **Zusammenfassung**

Es wird eine Filteranordnung (1) beschrieben, die ein Filtergehäuse (2) mit Wandungen mit seitlichen und stirnseitigen Begrenzungsflächen (20a, 20b, 20c) sowie einen im Wesentlichen plattenförmigen Filtereinsatz (3) umfasst, wobei der Filtereinsatz (3) in das Filtergehäuse (2) einsetzbar ist und eine im Wesentlichen zick-zack-förmig gefaltete Filterbahn umfasst mit wenigstens einem stirnseitigen Endfaltenbereich (3a), welcher beim Einsetzen des Filtereinsatzes (3) in das Filtergehäuse (2) unter elastischer Vorspannung dichtend an die zugeordnete stirnseitige Begrenzungsfläche (20c) des Filtergehäuses (2) anlegbar ist. Erfindungsgemäß ist vorgesehen, um eine verbesserte Abdichtung zu erzielen, dass die zugeordnete stirnseitige Begrenzungsfläche (20c) des Filtergehäuses (2) eine nach innen gerichtete Einwölbung aufweist.

## Beschreibung

### Technisches Gebiet

Die Erfindung betrifft eine Filteranordnung umfassend ein Filtergehäuse mit Wandungen mit seitlichen und stirnseitigen Begrenzungsflächen sowie einen im Wesentlichen plattenförmigen Filtereinsatz, der in das Filtergehäuse einsetzbar ist und eine im Wesentlichen zick-zack-förmig gefaltete Filterbahn umfasst mit wenigstens einem stirnseitigen Endfaltenbereich, welcher beim Einsetzen des Filtereinsatzes in das Filtergehäuse unter elastischer Vorspannung dichtend an die zugeordnete stirnseitige Begrenzungsfläche des Filtergehäuses anlegbar ist.

### Stand der Technik

Filterelemente mit zick-zack-förmig gefalteter Filterbahn, insbesondere aus Vliesstoff, werden für die verschiedensten Anwendungszwecke hergestellt. Beispielsweise werden sie zum Filtrieren von Frischluft für den Innenraum eines Kraftfahrzeugs, aber auch in Anlagen zum Klimatisieren von Räumen benutzt. In Kraftfahrzeugen werden solche Filterelemente in entsprechende Filtergehäuse eingesetzt. Nachteilig an solchen Filterelementen bzw. einer solchen Filteranordnung ist, dass es insbesondere an den stirnseitigen Enden der Filterelemente zu Leckagen kommen kann. Diese können im Dauerbetrieb zu Verwerfungen bzw. Deformation der angrenzenden Falten führen, wodurch sich der Bypasseffekt noch zusätzlich verstärkt und schließlich eine unzureichende Filterflächennutzung die Folge sein kann. Bei besonderen Anforderungen an die Dichtigkeit ist man daher zunehmend dazu übergegangen, im Stirnbereich des Filterelements zusätzliche Dichtelemente, wie z. B. Labyrinthdichtungen, Schäume, Profile usw. zur Abdichtung vorzusehen. Nachteilig an diesen bekannten Filteranordnungen ist der mit dem Einsatz dieser Dichtelemente verbundene erhöhte Material- und Herstellungsaufwand.

Aus der DE 196 191 06 A1 ist eine Filteranordnung bekannt, die so ausgebildet ist, dass sie auch ohne Einsatz der oben beschriebenen zusätzlichen Dichtelemente im stirnseitigen Bereich des Filtereinsatzes sehr gute Leckagewerte aufweist. Diese Filteranordnung, die den gattungsgemäßen Stand der Technik bildet, umfasst ein Filtergehäuse mit Wandungen mit seitlichen und stirnseitigen Begrenzungsflächen sowie einen Filtereinsatz, der aus einer zick-zack-förmig gefalteten Filterbahn mit stirnseitigen Wänden besteht. Die stirnseitigen Wände sind so ausgebildet, dass sie Dichtungslaschen bilden, die beim Einsetzen des Filtereinsatzes in das Filtergehäuse die stirnseitigen Begrenzungsflächen des Filtergehäuses unter elastischer Vorspannung dichtend berühren. Hierbei begrenzen die stirnseitigen Wände mit ihrer jeweiligen Nachbarfalte einen im wesentlichen V-förmigen Querschnitt, der auf der Anströmseite des zu filternden Mediums offen ist. Die Nachbarfalten sind auf der dem Gehäuse abgewandten Seite der Stirnwände angeordnet, wobei der V-förmige Querschnitt, den sie mit den Stirnwänden begrenzen derart geöffnet ist, dass sich der Anpressdruck der Stirnwände an das Gehäuse durch das anströmende Medium verstärkt.

### Darstellung der Erfindung

Aufgabe der Erfindung ist, eine Filteranordnung der eingangs genannten Art so weiterzubilden, dass eine hohe Dichtwirkung auch ohne spezielle Ausbildung des Endfaltenbereichs des Filtereinsatzes und insbesondere auch unabhängig von der Einbaurichtung des Filtereinsatzes erzielbar ist.

Diese Aufgabe wird gelöst mit einer Filteranordnung mit allen Merkmalen des Patentanspruchs 1. Vorteilhafte Ausgestaltungen der Erfindung sind in den Unteransprüchen beschrieben.

Gemäß der Erfindung ist bei einer Filteranordnung, welche ein Filtergehäuse mit Wandungen mit seitlichen und stirnseitigen Begrenzungsflächen sowie einen im Wesentlichen plattenförmigen Filtereinsatz umfasst, der in das Filtergehäuse einsetzbar ist und eine im Wesentlichen zick-zack-förmig gefaltete Filterbahn umfasst mit wenigstens einem stirnseitigen Endfaltenbereich, welcher beim Einsetzen des Filtereinsatzes in das Filtergehäuse unter elastischer Vorspannung dichtend an die zugeordnete stirnseitige Begrenzungsfläche des Filtergehäuses anlegbar ist, die zugeordnete stirnseitige Begrenzungsfläche des Filtergehäuses nach innen in den Filtergehäuseinnenraum hinein eingewölbt. Es hat sich in überraschender Weise gezeigt, dass durch diese einfache Maßnahme eine deutliche Verbesserung der Dichtwirkung erzielt wird, und dies selbst bei solchen Filtereinsätzen, bei denen der Faltenauslauf der Filterbahn weder zur Erhöhung der Dichtigkeit speziell ausgebildet noch mit zusätzlichen Dichtelementen versehen ist. Weiterhin wird die sehr gute Dichtwirkung unabhängig von der Einbaurichtung des Filtereinsatzes erzielt.

Die Einwölbung der stirnseitigen Begrenzungsfläche hat zur Folge, dass der stirnseitige Endfaltenbereich, beispielsweise der Faltenauslauf, des Filtereinsatzes beim Einsetzen des Filtereinsatzes in das Filtergehäuse zusammengepresst wird. Dadurch, dass die Filterbahn aus einem im Wesentlichen elastischen Material besteht, legt sich der Endfaltenbereich unter elastischer Vorspannung dichtend an die eingewölbte Begrenzungsfläche an.

Unter Filtergehäuse soll in Sinne dieser Erfindung jede mögliche Aufnahmeeinrichtung für einen Filtereinsatz verstanden werden, beispielsweise auch ein Filterrahmen. Das richtige Maß für die Einwölbung kann vom Fachmann in einfacher Weise, beispielsweise anhand einiger einfacher Routine-Experimente, leicht ermittelt werden, wobei auch Gehäuse- und Filtereinsatz-Toleranzen zu beachten sind.

Die stirnseitige Begrenzungsfläche ist vorzugsweise im Wesentlichen konkav ausgebildet. Durch diese Maßnahme wird die Anlagefläche vergrößert, das zusammengepresste Material hat die Möglichkeit auszuweichen, wodurch eine Wellenbildung im Endfaltenbereich vermieden wird.

Der Filtereinsatz ist in seinem Endfaltenbereich in der Regel im Wesentlichen plan ausgebildet. Es liegt jedoch auf der Hand, dass die erfindungsgemäße Wirkung auch dann eintritt, wenn der Endfaltenbereich in die eine oder andere Richtung leicht (konvex oder konkav) gewölbt ist.

In einer besonders bevorzugten Ausführungsform der Erfindung wird die stirnseitige Begrenzungsfläche durch die stirnseitige Wandung des Filtergehäuses gebildet. Hierdurch ergibt sich ein besonders einfacher Aufbau der Filteranordnung, der sich auch in einer Verminderung der Material- und Herstellungskosten niederschlägt.

Eine zusätzliche Verbesserung der Dichtwirkung wird dadurch erzielt, dass die Filterbahn im Endfaltenbereich versteift ist. Hierdurch erhöht sich die Anpresskraft des Endfaltenbereichs auf die stirnseitige, konkav nach innen gewölbte Begrenzungsfläche des Filtergehäuses. Im einfachsten Fall ist lediglich der Faltenauslauf versteift. Auch eine Beschichtung, beispielsweise eine Gummierung des Filterbahnmaterials im Endfaltenbereich führt zu einer Verbesserung der erfindungsgemäßen Wirkung.

Besonders einfach sind die Verhältnisse, wenn als Filtereinsatz ein an sich bekanntes Kombifilter verwendet wird. Hierunter versteht man Filterelemente, die in der Regel aus Vliesstoff bestehen und bei denen die Filterbahn wenigstens eine Lage aus einem Partikel filternden Material und wenigstens eine Lage aus einem Material, das chemische Schadstoffe filtert, insbesondere ein adsorbierendes Material, wie zum Beispiel Aktivkohle, umfasst. Dadurch, dass die Filterbahn sich aus mehreren Lagen aus Filtermaterial zusammensetzt, besitzt sie eine größere Steifigkeit als einfache Filter. Auch sind Kombifilter in der Regel zur Fixierung der Aktivkohle in dem Trägermaterial am Filterbahnrand mit einer Gummierung versehen, die zusätzlich zur Abdichtung beiträgt. Aber auch ohne diese Gummierung wird bei einem Kombifilter der genannten Art eine sehr gute Dichtwirkung erzielt.

Die vorliegende Erfindung kann auf Filteranordnungen mit Filtereinsätzen aus beliebigen Filterwerkstoffen Anwendung finden. Vorzugsweise besteht die Filterbahn jedoch aus Vliesstoff. Die Filterbahn kann, wie bereits oben erwähnt, ein- oder mehrlagig ausgebildet sein, beispielsweise eine Partikel- und eine chemische Filterlage, insbesondere eine Aktivkohlefilterlage, umfassen.

Die erfindungsgemäße Filteranordnung kann überall da Anwendung finden, wo ein Fluidstrom von schädlichen Inhaltsstoffen gereinigt werden soll, unabhängig davon, ob es sich um einen Gas- oder Flüssigkeitsstrom handelt.

Eine bevorzugte Anwendung ist die in Geräten zum Klimatisieren von Räumen, wobei sowohl mobile als auch stationäre Anwendungen denkbar sind. Besonders bevorzugt wird die erfindungsgemäße Filteranordnung in einer Klimaanlage für ein Kraftfahrzeuge eingesetzt.

Nachfolgend wird die Erfindung anhand der Figur näher erläutert.

Es zeigt:

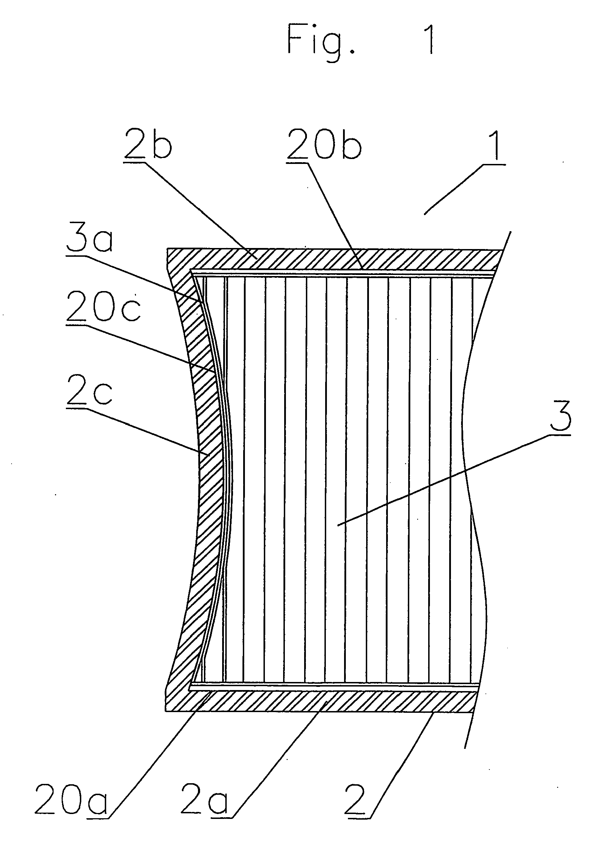

- Figur 1:: in schematischer Teildarstellung eine erfindungsgemäße Filteranordnung in Draufsicht.

Man erkennt in Fig. 1 eine Filteranordnung 1, welche ein Filtergehäuse 2 mit Wandungen 2a, 2b, und 2c mit seitlichen und stirnseitigen Begrenzungsflächen 20a, 20b und 20c sowie einen im Wesentlichen plattenförmigen Filtereinsatz 3 umfasst, der in das Filtergehäuse 1 einsetzbar ist. Der Filtereinsatz 3 weist eine zick-zack-förmig gefaltete Filterbahn auf mit einem stirnseitigen Endfaltenbereich 3a, welcher beim Einsetzen des Filtereinsatzes 3 in das Filtergehäuse 1 unter elastischer Vorspannung dichtend an die zugeordnete stirnseitige Begrenzungsfläche 20c des Filtergehäuses 1 anlegbar ist. Erfindungsgemäß ist die zugeordnete stirnseitige Begrenzungsfläche 20c des Filtergehäuses 1 nach innen in den Filtergehäuseinnenraum hinein eingewölbt. Gemäß einer bevorzugten Ausführungsform der Erfindung wird die eingewölbte Begrenzungsfläche 20c durch die stirnseitige Gehäusewandung 2c gebildet. Man erkennt in der Figur weiterhin, dass der stirnseitige Endfaltenbereich 3a des Filtereinsatzes 1 durch die eingewölbte Begrenzungsfläche 20c des Filtergehäuses zusammengepresst wird. Dadurch, dass die Filterbahn aus einem im Wesentlichen elastischen Material besteht, legt sich der Endfaltenbereich 3a unter elastischer Vorspannung dichtend an die eingewölbte Begrenzungsfläche 20c an.

## Patentansprüche

1. Filteranordnung (1) umfassend ein Filtergehäuse (2) mit Wandungen mit seitlichen und stirnseitigen Begrenzungsflächen (20a, 20b, 20c) sowie einen im Wesentlichen plattenförmigen Filtereinsatz (3), der in das Filtergehäuse (2) einsetzbar ist und eine im Wesentlichen zick-zack-förmig gefaltete Filterbahn umfasst mit wenigstens einem stirnseitigen Endfaltenbereich (3a), welcher beim Einsetzen des Filtereinsatzes (3) in das Filtergehäuse (2) unter elastischer Vorspannung dichtend an die zugeordnete stirnseitige Begrenzungsfläche (20c) des Filtergehäuses (2) anlegbar sind, **dadurch gekennzeichnet, dass** die zugeordnete stirnseitige Begrenzungsfläche (20c) des Filtergehäuses (2) eine nach innen gerichtete Einwölbung aufweist.

2. Filteranordnung nach Anspruch 1, **dadurch gekennzeichnet, dass** die Wölbung im Wesentlichen konkav ausgebildet ist.

3. Filteranordnung nach Anspruch 1 oder 2, **dadurch gekennzeichnet, dass** die stirnseitige Begrenzungsfläche (20c) durch die stirnseitige Wandung (2c) des Filtergehäuses (2) gebildet wird.

4. Filteranordnung nach einem der Ansprüche 1 bis 3, **dadurch gekennzeichnet, dass** die Filterbahn im Endfaltenbereich (3a) versteift ist.

5. Filteranordnung nach einem der Ansprüche 1 bis 4, **dadurch gekennzeichnet, dass** der Filtereinsatz einen an sich bekannten Kombifilter umfasst, bei welchem die Filterbahn wenigstens einer Lage aus einem Partikel filternden Material und wenigstens einer Lage aus einem Material, das chemische Schadstoffe filtert, umfasst.
